# EUROPEAN PATENT APPLICATION

(11) **EP 4 738 856 A1**
(43) Date of publication of application: **06.05.2026**
(21) Application number: 24210752.2
(22) Date of filing: 05.11.2024
(51) Int. Cl.: H04N 23/51, H04N 23/54, H04N 23/57, G03B 1/00, G03B 17/26, G03B 17/48, G03B 17/56, G03B 19/04

(54) **A DIGITAL IMAGING SYSTEM FOR CONVERTING A FILM CAMERA INTO A DIGITAL CAMERA**

(71) Applicant: Tecam GmbH, 61440 Oberursel (DE)
(72) Inventor: Choi, Yong-Jae, 61440 Oberursel (DE)
(74) Representative: Schultheiss & Sterzel Patentanwälte PartG mbB

(57) **Abstract**

The invention relates to a digital imaging system for converting a film camera into a digital camera, a method for capturing a digital image with a film camera using a digital imaging system and a kit of parts comprising a digital imaging system for converting a film camera into a digital camera.

## Description

The present invention relates to a digital imaging system for converting a film camera into a digital camera, a method for capturing a digital image with a film camera using a digital imaging system and a kit of parts comprising a digital imaging system for converting a film camera into a digital camera.

Although digital cameras are widely available today, analog film cameras are still in use and many people enjoy taking pictures with them. This is mainly due to the lack of complex exposure options that digital cameras often offer, combined with the challenge of getting a good picture without the help of digital aids such as programmed scenes like portrait mode, landscape mode or fireworks mode. However, the analog film and the processing of the exposed film to obtain images is rather expensive and laborious. In fact, traditionally, the processing of an exposed film is done by professional companies so that the results are obtained a long time after the picture was taken.

For solving the problems mentioned above, many proposals are provided. For examples the documents CN 2901369, WO 2023/228593 A1 and US 11,233,950 provide electronic devices for converting a film camera into a digital camera. However, these proposals are complicated to handle and need high amount of energy and processing power to achieve a digital image with an analogue film camera.

Thus, there is a high need to provide a more effective, more reliable device for converting a film camera into a digital camera. The digital imaging system should be easy to handle and easy to install. Furthermore, the digital imaging system should enable to take complex pictures which are not provided by prior art devices. Furthermore, it is an object of the present invention to provide a digital imaging system which can easily adapted to different kinds of analogue film cameras, especially film cameras having a cartridge system.

These objects and further objects which are not stated explicitly but which are derivable or discernible from the connections discussed herein by way of introduction are solved by a digital imaging system for converting a film camera into a digital camera having all features of claim 1.

The present invention accordingly provides a digital imaging system for converting a film camera into a digital camera, the digital imaging system comprising an image sensor module and a cartridge module, wherein the image sensor module and the cartridge module are detachable and connectable with each other by contact pins;
the image sensor module comprising an image sensing array, a processing unit coupled to the image sensing array for read-out an image from the image sensing array, a first memory coupled to the processing unit for storing a digital picture derived from an image read-out from the image sensing array and processed by the processing unit, and a sensor for detecting a film advance crank lever movement;
the cartridge module comprising a second memory coupled to the first memory via the contact pins for long time storing a digital picture derived from an image read-out from the image sensing array, an on/off switch being operable by a rewinding lever of a film camera, and a battery and an USB port for charging the battery;
the digital imaging system comprising a sound output unit.

The digital imaging system converts a film camera into a digital camera. The film camera is preferably a single-lens reflex camera that uses a 35-mm film. However, the film camera can be any other camera including a mechanical shutter. The film camera is not limited to a single-lens reflex camera, and the film is not limited to a 35-mm film. The mechanical shutter, such as a focal plane shutter or a leaf shutter, e. g. a Compur shutter, includes a mechanical component that opens and closes. Any mechanical shutter can be used as long as the shutter includes a light-shielding curtain (or a light-shielding blade) that opens and closes an opening through which light passes (an optical path open-close device).

The film camera preferably includes, as main components, a camera body, a lens, a shutter button, a shutter speed dial, a film advance crank lever, a rewinding lever, a viewfinder, and a rear lid. Inside the film camera body, the film camera preferably includes a cartridge chamber, a rewinding fork and a take-up spool.

The shutter button is a button used to open and close the shutter curtain. The shutter button is preferably disposed on the upper face of the camera body on the right side when the camera is viewed from the rear side. However, the shutter button can also be on any other suitable place. When the shutter button is pushed down, the shutter curtain runs at a shutter speed set by the shutter speed dial. The exposure time of the film is determined by the shutter speed.

The film advance crank lever is an example of a winding operation portion for winding a film. The film advance crank lever is preferably disposed on the upper face of the camera body, beside the shutter speed dial, and is coupled to the take-up spool. Each time the film advance crank lever is operated, the take-up spool rotates.

The above and below described features of a film camera are useful to take a picture with the digital imaging system according to the present invention.

The image sensor module and the cartridge module are detachable and connectable with each other by contact pins. The contact pins provide energy to the image sensor module and enable a data transfer between the image sensor module and the cartridge module. The number and type of pins depend on the requirements of the data protocol used for transferring data and energy. Such embodiment enables the adaption of the present digital imaging system to specific need. Especially different cartridge modules can be used with one image sensor module, e.g. in order to easily emulate a specific ISO value with a specific cartridge module. The same is true with regard to other features of an analogue film, such as film sharpness, etc. This enables an easy handling of the present digital imaging system and avoids operating errors. Preferably the image sensor module and a cartridge module are secured together by magnetic force. Alternatively, the image sensor module and a cartridge module can be held together mechanically, e. g. by plug contacts.

More preferably, the contact pins of one of the image sensor module and the cartridge module are provided on a strap, preferably the contact pins of the image sensor module are provided on a strap. The strap enables the adjustment of the length between the cartridge and the sensor module to fit into different kinds of cameras. Preferably, the strap is slidable into the image sensor module or the cartridge module.

In a preferred embodiment the sensor for detecting a film advance crank lever movement comprising a thong for measuring a rotating movement of an internal take-up spool of a film camera and the thong comprises a coil for measuring a change of a magnetic field and a take-up spool of a film camera comprises a magnetic element, preferably a magnetic stripe being secured by an adhesive to the take-up spool, preferably to a winding shaft of the take-up spool. Such embodiment improves the reliability of the system and lowers the energy consumption of the system. On the other hand, other sensors for detecting a film advance crank lever movement can be used, e.g. the image sensor module can be connected with a roller mechanism pressed against the take-up spool of a film camera by spring elasticity and a rotation of the take-up spool is measured as advance crank lever movement.

Preferably, the image sensor module comprises a holding magnet for fixing the sensor module to the body of a film camera, more preferably to the back-side of the shutter. Astonishingly, the handling of the present digital imaging system is improved by such feature. Especially, the conversion of a film camera is very easy and operation errors can be avoided. However, also other mounting of the image sensor module is possible, e.g. fixing the image sensor module to the rear lid by an adhesive, preferably a pressure-sensitive adhesive.

Furthermore it can be provided that the cartridge module comprising a memory card slot, preferably a SD card slot.

Additionally it can be provided that the cartridge module comprising a display, preferably an OLED or LCD display.

According to a preferred embodiment, the cartridge module preferably comprises a wireless communication module, more preferably a Bluetooth or WLAN module. More preferably, the Bluetooth module enables a pairing with a Bluetooth headset for transmitting the sound output. The pairing mode of the cartridge module can be activated, e. g. via control elements or the on/off switch.

This embodiment enables the use of the digital imaging system in situations wherein no sound should disturb others, e. g. in churches or museums and similar places or situation. Alternatively, the image sensor module can comprise a wireless communication module as mentioned above. However, it is preferable that the cartridge module comprises such module based on area needed for such module.

Moreover it can be provided that the cartridge module comprising data for adjusting the ISO value. Preferably, the data for adjusting the ISO value are selectable by control elements provided on the cartridge module or by wireless data transfer. Furthermore, the data can be fixed such that a specific cartridge module simulates a film having a specific ISO value.

In a further embodiment it can be provided that the image sensor module comprising data for adjusting the ISO value. Preferably, the data for adjusting the ISO value are selectable by control elements provided on the image sensor module.

The adjustment the ISO value enables the adaptation of the digital imaging system to specific light and exposure situations, respectively. This embodiment simplifies the handling of the camera.

Furthermore, it can be provided that the cartridge module comprising data for activation time of the image sensing array of the image sensor module. Preferably, the data for activation time of the image sensing array of the image sensor module are selectable by control elements provided on the cartridge module or by wireless data transfer. The digital imaging system needs energy during the activation of the image sensing array. Astonishingly, the variation of the activation time enables an energy saving and prolonging of the lifetime of the battery. Further improvements obtainable by this features are described in more detail below, along with the method for capturing a digital image

The cartridge module comprises a battery. The battery can be selected according to the needs of the user and the volume available. There are no specific limitation. However, conventional and commercial available batteries are preferred, especially Li-ion batteries.

The cartridge module comprises an USB port for charging the battery. Preferably, the USB port of the cartridge module is connected to the second memory of the cartridge module and is designed for data transfer.

The image sensing array can be adapted to specific requirements which are well known in the art. Preferably, the image sensing array of the image sensor module comprises an area in the range of 220 mm² to 870 mm², preferably 320 mm² to 800 mm².

Furthermore, it can be provided that the cartridge module comprises data for selecting a film simulation for digital image. Preferably, the data for selecting a film simulation for digital image are selectable by control elements provided on the cartridge module or by wireless data transfer.

Moreover, it can be provided that the cartridge module comprises data for selecting a sharpness value. Preferably, the data for selecting a sharpness value are selectable by control elements provided on the cartridge module or by wireless data transfer.

In a preferred embodiment, it can be provided that the cartridge module comprises data for selecting a dynamic range value. Preferably, the data for selecting a dynamic range value are selectable by control elements provided on the cartridge module or by wireless data transfer.

In a further preferred embodiment, it can be provided that the cartridge module comprises data for adjusting the White Balance. Preferably, the data for adjusting the White Balance are selectable by control elements provided on the cartridge module or by wireless data transfer.

Preferably, the on/off switch of the cartridge module comprises a neutral position into which the switch is returned after a rotational movement, more preferably by elastic force.

More preferably, the on/off switch of the cartridge module comprises at least one button which is triggered by a rotational movement, more preferably the on/off switch of the cartridge module comprises two buttons which are triggered by a rotational movement, wherein one button is triggered in a clockwise direction and the other button is triggered in a counterclockwise direction.

In a further preferred embodiment, the on/off switch of the cartridge module comprises at least two, preferably at least three rotational positions defining at least two, preferably at least three modes of operation.

Preferably, it can be provided that the on/off switch of the cartridge module comprises a sensor for determining an up/down movement.

Furthermore, it can be provided that the cartridge module comprising data for selecting an action or an operation mode being triggered by a movement of the on/off switch of the cartridge module. Preferably, the data for selecting an action or an operation mode being triggered by a movement of the on/off switch of the cartridge module is selectable by control elements provided on the cartridge module or by wireless data transfer.

The actions or operation modes being triggered by a movement of the on/off switch of the cartridge module are described in more detail below, along with the method for capturing a digital image.

A further subject matter of the present invention is a method for capturing a digital image with a film camera using a digital imaging system according to the present invention.

Preferably, a rotational movement of a film advance crank lever activates the image sensing array of the image sensor module. More preferably the rotational movement of a film advance crank lever starts a sound indicating the readiness for an image detection procedure. In further embodiment of the present invention, an operation of the on/off switch being operable by a rewinding lever of a film camera activates the image sensing array of the image sensor module.

More preferably, it can be provided that operating a film advance crank lever of the film camera indicates the end of an image detection procedure, an image from the image sensing array is read-out and processed by the processing unit and a digital picture derived from the image read-out from the image sensing array and processed by the processing unit is stored in a first memory coupled to the processing unit for storing a digital picture, and the image sensing array of the image sensor module is reactivated for a further image and a sound indicating the readiness for an image detection procedure is restarted. Preferably, a digital picture based on the image processed in the image sensor module and stored in the first memory coupled to the read-out circuit is transferred to the second memory of the cartridge module after ending the image detection procedure and a sound indicating a transfer of the digital picture is provided. This embodiment provides astonishing improvements regarding efficiency and handling of the digital imaging system. The digital imaging system provides clear and immediate feedback to the user about the operating status, as well as the ability to rapidly capture multiple images in a short period of time. Furthermore, the processing load is low.

Preferably, the image from the image sensing array is only read-out and processed by the processing unit if the image sensing array of the image sensor module is in an active mode, more preferably the active mode is indicated by a sound indicating the readiness for an image detection procedure. If no activation of the film advance crank lever or the rewinding lever of a film camera is detected by the digital imaging system within a specified period of time, preferably no image is processed. This embodiment simplifies the operation of the digital imaging system and saves energy.

Preferably, it can be provided that the image sensing array of the image sensor module is deactivated after a specified period of time and/or the active mode of the image sensing array of the image sensor module ends after a specified period.

According to a preferred embodiment, the specified period of time is within a range of 10 s to 120 s, preferably 20 s to 40 s. According to a further preferred embodiment, the specified period of time is within a range of 60 s to 1200 s, preferably 120 s to 600 s. The specified period of time is dependent on the type of picture to be taken. In a double exposure or long-exposure situation, a longer specified period of time is preferably selected. Conversely, in a typical daytime photo, a shorter specified period of time is more appropriate. Please note that in a preferred embodiment the operating a film advance crank lever of the film camera indicates the end of an image detection procedure and reactivates image sensing array of the image sensor module for a further image and, hence, in this embodiment many pictures could be taken in short time.

Preferably, it can be provided that no data are saved or processed after the image sensing array of the image sensor module is deactivated after a specified period of time and/or the active mode of the image sensing array of the image sensor module ends after a specified period.

Furthermore, it can be provided that a rotational movement of the rewinding lever acts on the on/off switch of the cartridge module and preferably deactivates the image sensing array of the image sensor module. More preferably, the rotational movement of the rewinding lever acts on the on/off switch of the cartridge module and stops any sound indicating the readiness for an image detection procedure. Depending on the operation mode, an image could be discarded or processed and stored.

Moreover, it can be provided that a rotational movement of the rewinding lever acts on the on/off switch of the cartridge module and deactivates the image sensing array of the image sensor module and the image measured by the image sensing array and achieved by pressing a shutter button of a film camera but not processed by the processing unit and saved in a first memory coupled to the processing unit is discarded. Preferably the rotational movement of the rewinding lever acts on the on/off switch of the cartridge module and stops any sound indicating the readiness for an image detection procedure. Preferably, the rotational movement of the rewinding lever acts on the on/off switch of the cartridge module and stops any sound indicating the readiness for an image detection procedure and a sound indicating that no digital picture has been stored is provided.

In a preferred embodiment, it can be provided that a rotational movement of the rewinding lever acts on the on/off switch of the cartridge module and an image from the image sensing array is read-out and processed by the processing unit and a digital picture derived from the image read-out from the image sensing array and processed by the processing unit is stored in a first memory coupled to the processing unit for storing a digital picture and the rotational movement of the rewinding lever deactivates the image sensing array of the image sensor module. Preferably, the rotational movement of the rewinding lever acts on the on/off switch of the cartridge module and stops any sound indicating the readiness for an image detection procedure and the digital picture being stored in the first memory coupled to the read-out circuit is transferred to the second memory of the cartridge module after ending the image detection procedure. More preferably, the rotational movement of the rewinding lever acts on the on/off switch of the cartridge module and stops any sound indicating the readiness for an image detection procedure and the digital picture being stored in the first memory coupled to the read-out circuit is transferred to the second memory of the cartridge module after ending the image detection procedure and a sound indicating that a digital picture has been stored is provided.

In a further preferred embodiment, it can be provided that a rotational movement of the rewinding lever in a specific direction acts on the on/off switch of the cartridge module and deactivates the image sensing array of the image sensor module and the image measured by the image sensing array and achieved by pressing a shutter button of a film camera but not processed by the processing unit and saved in a first memory coupled to the processing unit is discarded. In a more preferred embodiment, a rotational movement of the rewinding lever in a counter direction as for discarding an image acts on the on/off switch of the cartridge module and an image from the image sensing array is read-out and processed by the processing unit and a digital picture derived from the image read-out from the image sensing array and processed by the processing unit is stored in a first memory coupled to the processing unit for storing a digital picture and the rotational movement of the rewinding lever deactivates the image sensing array of the image sensor module.

In a further preferred embodiment, it can be provided that a rotational movement of the rewinding lever in a specific direction acts on the on/off switch of the cartridge module and deactivates the image sensing array of the image sensor module and the image measured by the image sensing array and achieved by pressing a shutter button of a film camera but not processed by the processing unit and saved in a first memory coupled to the processing unit is discarded and any sound indicating the readiness for an image detection procedure is stopped and a sound indicating that no digital picture has been stored is provided. In a more preferred embodiment, a rotational movement of the rewinding lever in a counter direction as for discarding an image acts on the on/off switch of the cartridge module and an image from the image sensing array is read-out and processed by the processing unit and a digital picture derived from the image read-out from the image sensing array and processed by the processing unit is stored in a first memory coupled to the processing unit for storing a digital picture and the rotational movement of the rewinding lever deactivates the image sensing array of the image sensor module and any sound indicating the readiness for an image detection procedure is stopped and the digital picture being stored in the first memory coupled to the read-out circuit is transferred to the second memory of the cartridge module after ending the image detection procedure and a sound indicating that a digital picture has been stored is provided. The rotational movement of the rewinding lever in a specific direction for discarding an image can be clockwise or anticlockwise. Preferably the user can select the direction for discarding or storing by changing the corresponding data in the cartridge module.

Furthermore, it can be provided that the sound indicating that no digital picture has been stored is different to the sound indicating that indicating that a digital picture has been stored. In addition thereto, the sound for indicating the activation mode or the readiness for an image detection procedure can be different to the sound indicating that indicating that a digital picture has been stored and/or indicating that no digital picture has been stored.

In a preferred embodiment, a rotational movement of the rewinding lever in clockwise direction acts on the on/off switch of the cartridge module and activates the image sensing array of the image sensor module and sets a first specified period of time after which first specified period of time the image sensing array of the image sensor module is deactivated.

Furthermore, it can be provided that a rotational movement of the rewinding lever in counterclockwise direction acts on the on/off switch of the cartridge module and activates the image sensing array of the image sensor module and sets a second specified period of time after which second specified period of time the image sensing array of the image sensor module is deactivated.

Preferably, a sound indicating the readiness for an image detection procedure starts after the rotational movement of the rewinding lever and the sound output as response to a clockwise direction movement is different to the sound output as response to a counterclockwise direction movement.

Furthermore, it can be provided that a down movement of the rewinding lever acts on the on/off switch of the cartridge module and activates the digital imaging system for converting a film camera into a digital camera, especially the sensor for detecting a film advance crank lever movement of the image sensor module.

Preferably, a up movement of the rewinding lever acts on the on/off switch of the cartridge module and deactivates the digital imaging system for converting a film camera into a digital camera, especially the sensor for detecting a film advance crank lever movement of the image sensor module.

Furthermore, it can be provided that the on/off switch of the cartridge module comprises a neutral position into which the switch is returned after a rotational movement, preferably by elastic force, and a holding time of a rotational movement is measured and an action or an operation mode being triggered by the rotational movement of the on/off switch of the cartridge module is selected on the holding time of the rotational movement.

Preferably, the on/off switch of the cartridge module comprises a neutral position into which the switch is returned after a rotational movement, preferably by elastic force, and a number of rotational movements is measured within a specified period of time and an action or an operation mode being triggered by number of rotational movements of the on/off switch of the cartridge module is selected on the holding time of the rotational movement.

In a further preferred embodiment, the on/off switch of the cartridge module comprises at least one button which is triggered by a rotational movement, preferably the on/off switch of the cartridge module comprises two buttons which are triggered by a rotational movement, wherein one button is triggered in a clockwise direction and the other button is triggered in a counterclockwise direction, more preferably the holding time of any button and or the number of rotational movements triggers different actions or operation modes.

Preferably, the processing unit of the image sensor module determines the exposure time based in the detection of the light as measured by the image sensing array.

Furthermore, it can be provided that data for setting the white balance is selectable and the data comprises light values for "daylight", "cloudy", "shadow", "twilight" and "fluorescent".

Furthermore, it can be provided that data for setting the sharpness is selectable and the data comprises sharpness values for "very fine", "fine", "normal", "smooth" and "very smooth".

Additionally, it can be provided that data for setting the dynamic range is selectable and the data comprises dynamic range values for "very high", "high", "normal", "low" and "very low".

Preferably, it can be provided that a film camera is used having a button suppressing a rotation of the take-up spool when an advance crank lever movement is operated to tension the shutter curtain and after taking a first image, the button suppressing a rotation of the take-up spool is pressed and, after operating the advance crank lever a second image is made. Preferably, the image sensing array of the image sensor module is deactivated after a specified period of time and the specified period of time is within a range of 60 s to 1200 s, preferably 120 s to 600 s.

Preferably, the image data as stored in the first memory is maintained till the data are transferred to the second memory or discarded as mentioned above. After the correct transfer to the second memory is achieved, the first memory is preferably cleared. Preferably, a discarding of image data includes a clearing of the first memory.

A further subject matter of the present invention is a kit of parts comprising a digital imaging system for converting a film camera into a digital camera according to the present invention and a cartridge dock.

In a preferred embodiment, the cartridge dock comprises a display.

Furthermore, it can be provided that the cartridge dock comprises a charging device.

Preferably, the cartridge dock comprises buttons for operating cartridge module settings.

Furthermore, it can be provided that the cartridge dock comprises a USB-port or a wireless communication module, preferably a Bluetooth or WLAN module for transferring images stored in the cartridge module.

Moreover, it can be provided that the cartridge dock comprises a printing system for printing images stored in the cartridge module.

More preferably, the kit comprises a magnetic stripe being securable by an adhesive to the take-up spool.

The invention is explained in greater detail below by means of figures. The invention can preferably be carried out throughout the range claimed and is not restricted to the figures given here.

Thus, the following figures describe the invention in more detail but do not limit the invention and its scope as claimed.

In the figures and the following description of the exemplary embodiments of the present invention explained with reference to the figures, some of the same reference signs are used for the same or similar parts in different exemplary embodiments and for different individual parts in order to simplify comparability of the exemplary embodiments and readability.

The disclosure is best understood from the following detailed description when read in connection with the accompanying drawing. Further exemplary embodiments of the invention are explained below with reference to seven schematically depicted figures without thereby limiting the invention in any way. Included in the drawing are the following figures:
Fig. 1 is a schematic front view of a film camera to be converted;
Fig. 2 a rear view illustrating the camera according to Fig. 1;
Fig. 3 is a schematic perspective rear side view of a digital imaging system for converting a film camera into a digital camera according to the invention in detached state;
Fig. 4 is a schematic perspective frontside view of a digital imaging system for converting a film camera into a digital camera according to the invention in detached state;
Fig. 5 is a schematic perspective rear side view of a digital imaging system for converting a film camera into a digital camera according to the invention in detached state;
Fig. 6 is a schematic perspective side view of a digital imaging system for converting a film camera into a digital camera according to the invention in detached state;
Fig. 7 is a schematic perspective view of a kit comprising a digital imaging system for converting a film camera into a digital camera according to the invention and a cartridge dock.

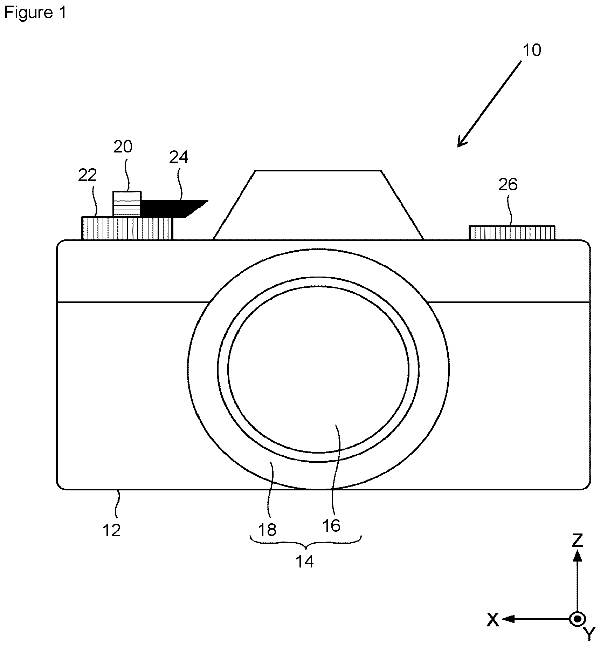

Fig. 1 is a front view illustrating a film camera 10 which can be converted into a digital camera by a digital imaging system according to the present invention.

In the description below, as illustrated in the drawings, an XYZ orthogonal coordinate system which is a rectangular coordinate system is defined. For convenience of description, the plus (+) side in the Z direction is referred to as the upper side, the minus (-) side in the Z direction is referred to as the lower side, the plus (+) side in the Y direction is referred to as the front side, and the minus (-) side in the Z direction is referred to as the rear side. Further, the X direction is a horizontal direction while the Z direction is a vertical direction. However, such references do not signify a universal top-bottom relationship, front-rear relationships, and vertical-horizontal relationships.

The film camera 10 is preferably a single-lens reflex camera that uses preferably a 35-mm film. The film camera 10 includes, as main components, a camera body 12, a lens 14 (a lens group 16 and a lens barrel 18), a shutter button 20, a shutter speed dial 22, a film advance crank lever 24, and a rewinding lever 26.

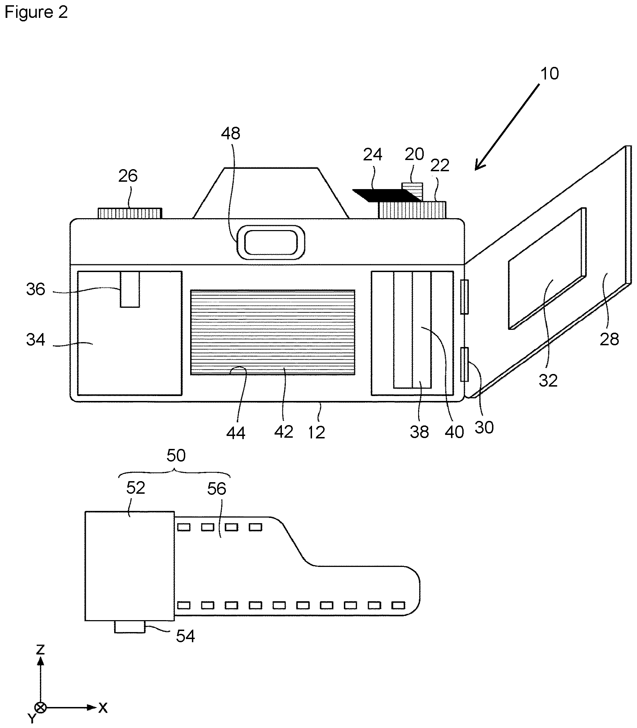

Fig. 2 shows a rear view of the film camera 10 according to Fig. 1. In addition to Fig. 1 Fig. 2 displays that the film camera 10 preferably includes a viewfinder 48, and a rear lid 28. As shown in Fig. 2, the film camera 10 includes a cartridge chamber 34, a rewinding fork 36, a take-up spool 38, a shutter curtain 42, and a shutter opening 44 inside the camera body 12. These components are visible when the rear lid 28 is open as illustrated in FIG. 2.

For the sake of illustration, Fig 2 also shows a film cartridge 50. In this specification, the cartridge 52 is a substantially cylindrical container capable of accommodating the film 56 in a wound state, and a combination of the cartridge 52 and the film 56 is the film cartridge 50.

In the following the function of the film camera 10 is described in more detail for clarifying the functionality of a digital imaging system according to the present invention. Please note that a movement of the film advance crank lever 24 is detectable by a sensor provided in the image sensor module. Furthermore a movement of the rewinding lever 26 is detectable by an on/off switch provided in the image cartridge module.

The camera body 12 is a portion of a housing of the film camera 10 as shown in Fig. 1 and Fig. 2. In a state where the lens 14 is attached thereto and the rear lid 28 is closed, the camera body 12 is optically sealed to protect the film 56 from light except when the film 56 is exposed. The camera body 12 constructs the housing of the film camera 10 together with the rear lid 28.

The lens 14 includes the lens group 16 and the lens barrel 18. The plurality of optical lenses included in the lens group 16 are held at positions optically determined by the lens barrel 18, and the lens barrel 18 is mounted on the plus side in the Y direction of the camera body 12. The side on which the lens barrel 18 is mounted is the front side of the film camera 10. The lens barrel 18 includes an aperture adjustment mechanism that adjusts the aperture (f-number) and a focus adjustment mechanism that adjusts the focus. The lens barrel 18 can further include a zoom function or the like.

The shutter button 20 is a button used to open and close the shutter curtain 42. The shutter button 20 is disposed on the upper face of the camera body 12 on the right side when the film camera 10 is viewed from the rear side (see FIG. 2). When the shutter button 20 is pushed down, the shutter curtain 42 runs at a shutter speed set by the shutter speed dial 22. The exposure time of the film 56 is determined by the shutter speed.

The shutter speed dial 22 is disposed on the upper face of the camera body 12 and around the shutter button 20. The shutter speed dial 22 is rotated to set the shutter speed to a desired shutter speed.

The film advance crank lever 24 is an example of a winding operation portion for winding a film. The film advance crank lever 24 is disposed on the upper face of the camera body 12, beside the shutter speed dial 22, and is coupled to the take-up spool 38. Each time the film advance crank lever 24 is wound up, the film 56 winding around the take-up spool 38 is wound up by the amount equivalent to one frame.

The rewinding lever 26 is an example of an operation portion that is operated from the outside of the camera body 12. The rewinding lever 26 is disposed on the upper face of the camera body 12 on the left side when the film camera 10 is viewed from the rear side (see FIG. 2). The rewinding lever 26 is coupled to the rewinding fork 36 in the cartridge chamber 34.

When the rewinding lever 26 is pulled up, the rewinding fork 36 is pulled up inside the cartridge chamber 34 (from the state illustrated in FIG. 2), and the cartridge chamber 34 is ready to accommodate the cartridge 52.

When the rewinding lever 26 is rewound after the photographing by the film camera 10 is finished, the rewinding fork 36 winds, into the cartridge 52, the film 56 from the take-up spool 38.

The viewfinder 48 is disposed at a center in an upper part on the rear side (see FIG. 2) of the camera body 12. The shutter opening 48 is for confirming a subject through the lens 52. The rear lid 28 is provided to open and close the rear side (see FIG. 2) of the camera body 12 substantially entirely. The rear lid 28 is hinged to the camera body 12 via a hinge 30. On the inner face of the rear lid 28 (the face on the plus side in the Y direction when the rear lid 28 is closed), a pressure plate 32 is disposed. The pressure plate 32 presses the film 56 in front of the shutter opening 44.

Depending on the thickness of the image sensor module of the digital imaging system the pressure plate 32 could be adapted or dismounted. In a further embodiment of the present invention, the image sensor module of the digital imaging system can be attached e. g. by an adhesive, preferably a pressure-sensitive adhesive to the rear lid 28 or an adapted pressure plate 32.

Although the film cartridge 50 is not loaded in the film camera 10 in FIG. 2, the film cartridge 50 or a digital imaging system of the present invention can be loaded in the film camera 10 or unloaded therefrom with the rear lid 28 opened. As illustrated in FIG. 2, when the rear lid 28 is opened, the rear sides of all of the cartridge chamber 34, the rewinding fork 36, the take-up spool 38, the shutter curtain 42, and the shutter opening 44 are open.

The cartridge chamber 34 is a space for accommodating the cartridge 52, and a lower end of the rewinding fork 36 projects down from the upper side into the cartridge chamber 34. The cartridge 52 is loaded therein in a state in which the rewinding lever 26 is pulled up, and the rewinding fork 36 is pulled up inside the cartridge chamber 34 (from the state illustrated in FIG. 2). When the rewinding lever 26 is pushed down in this state, the rewinding fork 36 is inserted into a recess of a spool (shaft) 54 of the cartridge 52. Similarly, the digital imaging system comprising the image sensor module and the cartridge module can be loaded to the film camera 10.

The rewinding fork 36 is an example of a movable portion that is interlocked with the movement of the rewinding lever 26 (predetermined operation portion) that is operated from the outside of the camera body 12. The rewinding fork 36 is coupled to the rewinding lever 26 through a through hole in the upper face of the camera body 12.

The rewinding fork 36 is rotatable about the Z axis and movable in the Z axis direction in accordance with the operation of the rewinding lever 26. The rewinding fork 36 is rotated when the film 56 is rewound inside the cartridge 52 after the film camera 10 has finished photographing with the film 56.

The take-up spool 38 is coupled to the film advance crank lever 24 through a through hole in the upper face of the camera body 12. The winding shaft 40 of the take-up spool 38 is a rod-shaped portion that winds the film 56, and has a slit into which a leading end (leader portion) of the film 56 wound in the cartridge 52 is inserted.

When the film 56 is pulled out from the cartridge 52 loaded in the cartridge chamber 34 and the leading end (leader portion) of the film 56 is inserted into the slit of the take-up spool 38, the film 56 moves to a position overlapping the shutter curtain 42. When the film advance crank lever 24 is wound up in a state where the leading end portion (leader portion) of the film 56 is inserted in the slit of the take-up spool 38, the film 56 is wound by the take-up spool 38 one frame at a time. The shutter curtain 42 is an example of a mechanical shutter, and is located on the rear side (minus side in the Y direction) of the shutter opening 44. The shutter opening 44 is located substantially at a center of the camera body 12 in the lateral direction with the rear lid 28 opened.

The shutter curtain 42 is, for example, such a focal plane shutter that the shutter curtain 42 is moved laterally relative to the shutter opening 44 by a shutter mechanism.

The closed state of the shutter curtain 42 is the state in which the shutter curtain 42 blocks the shutter opening 44. The open state of the shutter curtain 42 is the state where the shutter curtain 42 has moved in the lateral direction relative to the shutter opening 44, and the shutter opening 44 does not overlap with the shutter curtain 42. The shutter curtain 42 opens and closes by moving laterally driven by the shutter mechanism.

The shutter opening 44 is located on the rear side (minus side in the Y direction) of the lens 14 (see FIG. 1). Since the film 56 is located on the rear side (minus side in the Y direction) of the shutter curtain 42, the film 56 is exposed with light entering through the lens 14 and the shutter opening 44 while the shutter curtain 42 is open.

The time during which the shutter curtain 42 is held open (open time) is the exposure time. Since the exposure time is determined by the shutter speed, the open time of the shutter curtain 42 is set by the shutter speed dial 22.

Note that, here, although description will be made using the film camera 10 in which the shutter speed adjustment, the aperture (f-number) adjustment, and the focus adjustment are performed manually, aspects of the present disclosure are applicable to a film camera in which some or all of these adjustments are automated.

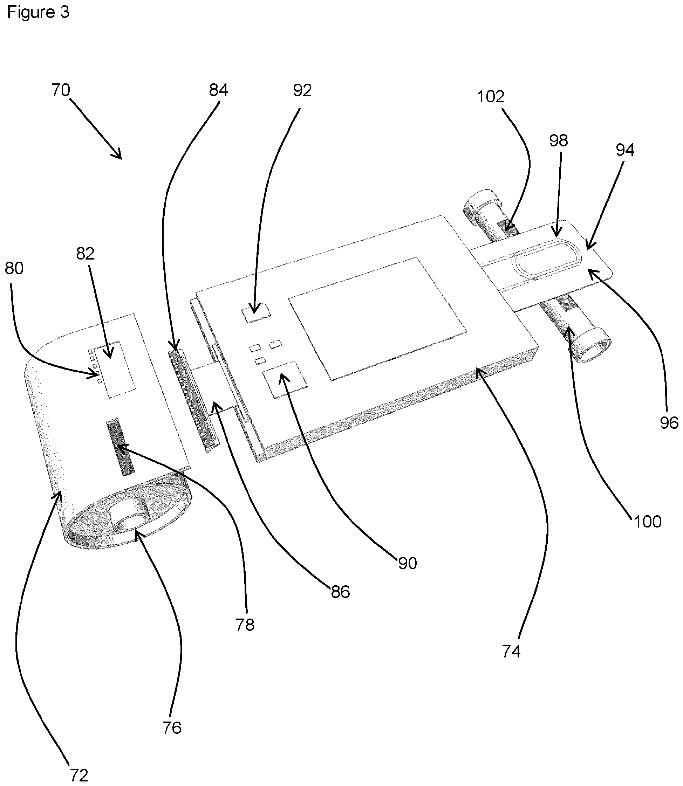

Fig. 3 shows a schematic perspective rear side view of a digital imaging system 70 for converting a film camera into a digital camera according to the invention in detached state. Fig. 3 depicts the rear side of a digital imaging system 70 being directed to a lid of a film camera as shown in Fig. 2. The digital imaging system 70 comprises a cartridge module 72 and an image sensor module 74.

The cartridge module 72 comprises a second memory, an on/off switch, a battery (not shown) and an USB port 76 for charging the battery. The cartridge module 72 has preferably essentially the same shape as a conventional cartridge of a cartridge film as shown above in Fig. 2 such that the cartridge module 72 fits into a cartridge chamber of a film camera as shown in Fig. 1 and Fig. 2.

The USB port 76 for charging the battery is located at a cartridge part having the shape of a spool (shaft) portion. However, the USB port 76 could also be placed on any other part of the cartridge module 72.

The cartridge module 72 preferably comprises SD card slot 78. An SD card is an useful second memory coupled to the first memory via the contact pins for long time storing a digital picture derived from an image read-out from the image sensing array. In addition thereto, the second memory coupled to the first memory via the contact pins for long time storing a digital picture derived from an image read-out from the image sensing array can be fixed in the cartridge module 72.

Additionally, the cartridge module 72 comprises control elements 80, e. g. small buttons and a display 82, preferably an OLED or LCD display. The control elements 80 are useful for adjusting the ISO values, adjusting or selecting an activation time of the image sensing array of the image sensor module, selecting a film simulation for digital image, selecting a sharpness value, selecting a dynamic range value, selecting a dynamic range value, adjusting the White Balance, e. g. The display 82 preferably shows the selectable or adjustable data provided.

The cartridge module 72 and the image sensor module 74 are detachable and connectable with each other by contact pins 84. The contact pins of the cartridge module 72 are not shown in Fig. 3. The contact pins 84 of the image sensor module 74 are provided on a strap 86. The strap 84 enables the adjustment of the length between the cartridge and the sensor module to fit into different kinds of film cameras. Preferably, the strap 86 is slidable into the image sensor module or the cartridge module as shown in Fig. 3.

Furthermore, the image sensor module 74 comprises a processing unit 90 coupled to the image sensing array for read-out an image from the image sensing array and a first memory 92 coupled to the processing unit for storing a digital picture derived from an image read-out from the image sensing array and processed by the processing unit.

The image sensor module 74 comprises a sensor 94 for detecting a film advance crank lever movement. The sensor 94 for detecting a film advance crank lever movement shown in Fig. 3 comprises a thong 96 that can be positioned near an internal take-up spool 100 of a film camera as shown in Fig. 2 and the thong 96 comprises a coil 98 for measuring a change of a magnetic field being due to a rotational movement of a magnetic element 102, preferably a magnetic stripe being attached to the take-up spool 100 by an adhesive, preferably to a winding shaft of the take-up spool 100. The take-up spool 100 with a magnetic element 102 is shown for illustrative purpose.

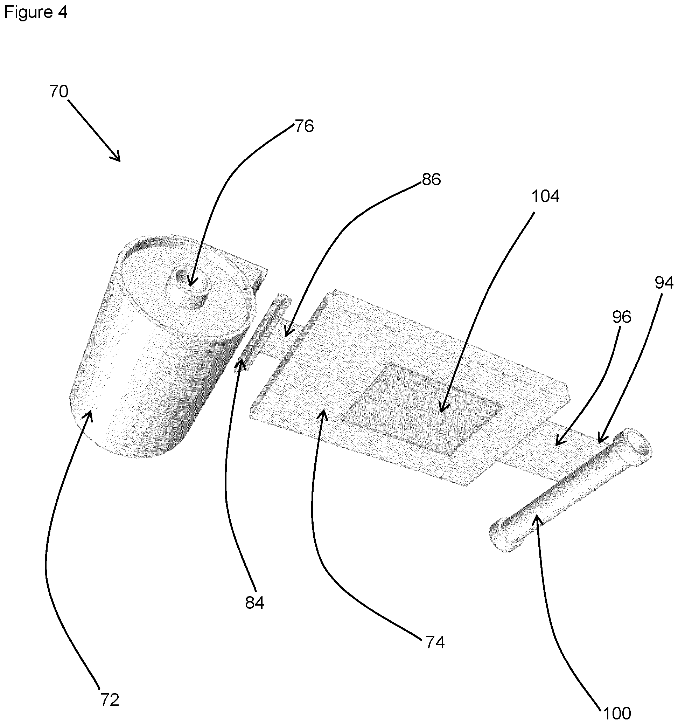

Fig. 4 shows a schematic perspective frontside view of a digital imaging system 70 for converting a film camera into a digital camera according to the invention in detached state as also shown in Fig.3. Fig. 4 depicts the frontside of a digital imaging system 70 being directed to a shutter of a film camera as shown in Fig. 2. The digital imaging system 70 comprises a cartridge module 72 and an image sensor module 74.

The cartridge module 72 comprises a second memory, an on/off switch, contact pins a battery (not shown), and an USB port for charging the battery 76. The cartridge module 72 has preferably essentially the same shape as a conventional cartridge of a cartridge film as shown above in Fig. 2 such that the cartridge module 72 fits into a cartridge chamber of a film camera as shown in Fig. 1 and Fig. 2.

The cartridge module 72 and the image sensor module 74 are detachable and connectable with each other by contact pins 84. The contact pins 84 of the image sensor module 74 are magnetically secured to the contact pins of the cartridge module 72 and are provided on a strap 86 as shown above in more detail.

The image sensor module 74 comprises a image sensing array 104. Image data measured with the image sensing array 104 are processed by a processing unit coupled to the image sensing array for read-out an image from the image sensing array and a first memory coupled to the processing unit for storing a digital picture derived from an image read-out from the image sensing array.

Furthermore, the image sensor module 74 comprises a sensor 94 for detecting a film advance crank lever movement. The sensor 94 for detecting a film advance crank lever movement comprises a thong 96 that can be positioned near an internal take-up spool 100 of a film camera as shown in Fig. 2.

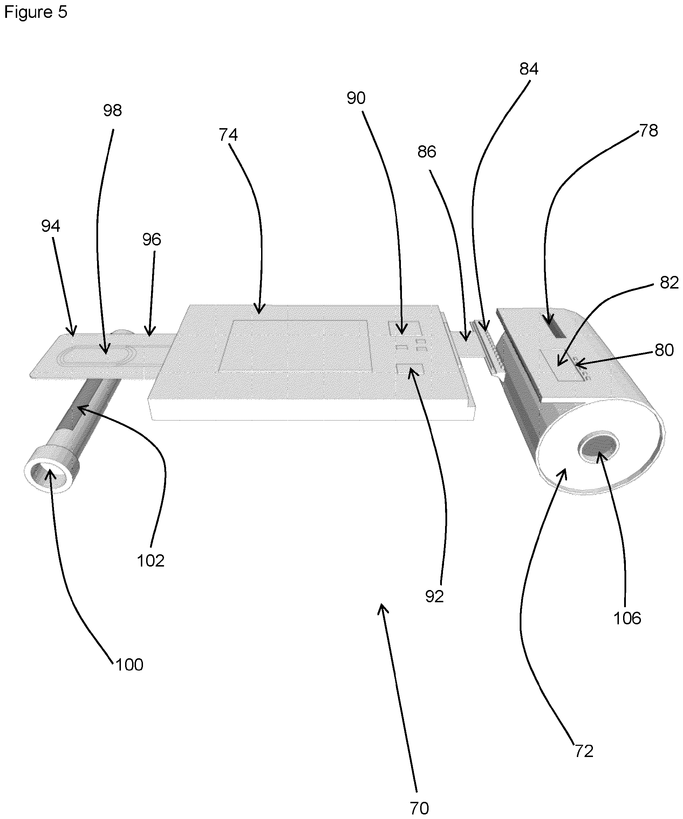

Fig. 5 is a schematic perspective rear side view of a digital imaging system 70 according to Fig. 3 and Fig. 4 in disconnected state. The rear side of a digital imaging system 70 is shown such that the side being directed to the top of a film camera is visible. The digital imaging system 70 comprises a cartridge module 72 and an image sensor module 74.

The cartridge module 72 comprises a second memory, an USB port for charging the battery, a battery (not shown) and an on/off switch 106.

The cartridge module 72 preferably comprises SD card slot 78, control elements 80, e. g. small buttons and a display 82, preferably an OLED or LCD display. The cartridge module72 and the image sensor module 74 are detachable and connectable with each other by contact pins. The contact pins of the image sensor module 84 are provided on a strap 86.

Furthermore, the image sensor module 74 comprises a processing unit 90 coupled to the image sensing array for read-out an image from the image sensing array and a first memory 92 coupled to the processing unit for storing a digital picture derived from an image read-out from the image sensing array and processed by the processing unit.

The image sensor module 74 comprises a sensor 94 for detecting a film advance crank lever movement. The sensor 94 comprises a thong 96 with a coil 98 as described above in more detail.

For illustrative purpose a take-up spool 100 of a film camera with magnetic element 102, preferably a magnetic stripe being attached to the by an adhesive, is also shown.

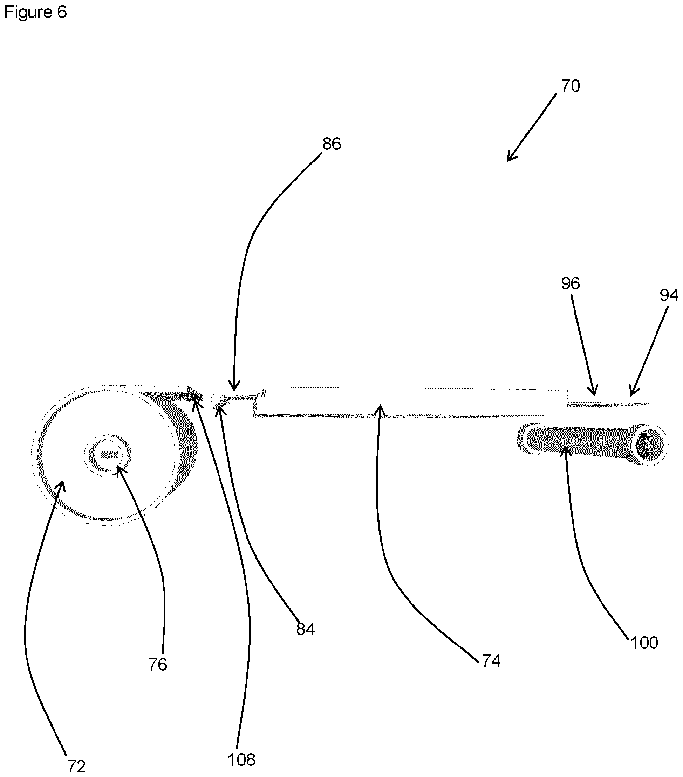

Fig. 6 shows a schematic perspective side view of a digital imaging system 70 for converting a film camera into a digital camera according to the invention in detached state according to Fig.3, Fig.4, and Fig.5.

Fig. 6 depicts the side of a digital imaging system 70 being directed to the bottom of a film camera as shown in Fig. 2. The digital imaging system 70 comprises a cartridge module 72 and an image sensor module 74.

The USB port 76 for charging the battery is located at a cartridge part having the shape of a spool (shaft) portion. The and connectable with each other by contact pins 84, 108. The contact pins 108 of the cartridge module 72 and the contact pins 84 of the image sensor module 74 enable that the cartridge module 72 and the image sensor module 74 are detachable. The strap 84, on which the contact pins 84 of the image sensor module 74 are provided, enables the adjustment of the length between the cartridge and the sensor module to fit into different kinds of film cameras.

Further elements of the image sensor module 74, such as a sensor 94 comprises a thong 96 are described in more detail above.

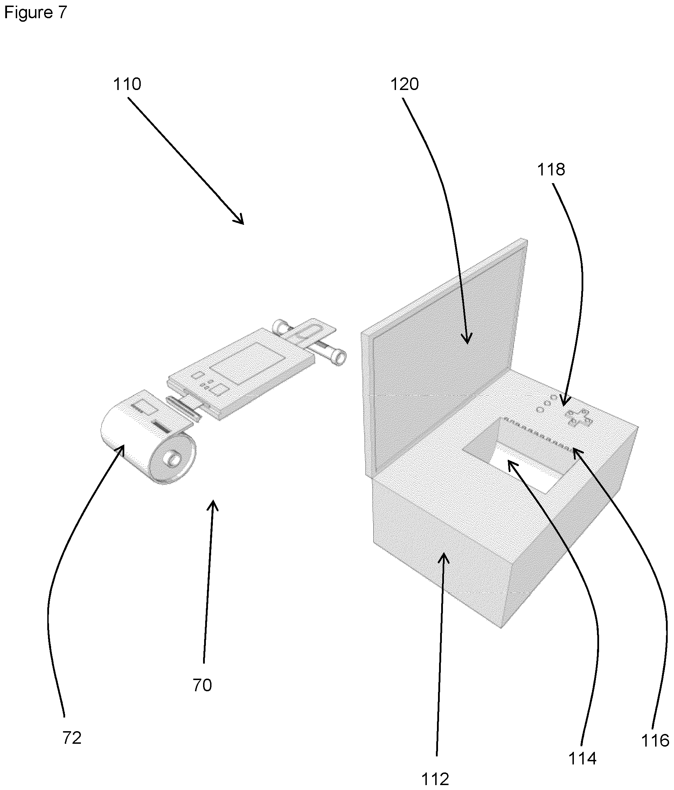

Fig. 7 is a schematic perspective view of a kit 110 comprising a digital imaging system 70 for converting a film camera into a digital camera according to the invention and a cartridge dock 112. The digital imaging system 70 is described in more detail by the above Figures 3 to 6.

The cartridge dock 112 comprises a cartridge chamber 114 into which the cartridge module 72 fits. Data transfer between the cartridge dock 112 and the cartridge module 72 is achieved via pins 116 of the cartridge dock 112 and pins of the cartridge module 72 (pins of the cartridge module 72 are not shown in Fig. 7). The data of the cartridge module 72, concerning e. g. ISO values, activation time of the image sensing array of the image sensor module, film simulation for digital image, sharpness values, dynamic range values, dynamic range values, White Balance can be adjusted with the control elements 118 of the cartridge dock. Data stored in the memory of the cartridge module 72 (second memory) can be read out and displayed on the display 120 of the cartridge dock.

### List of reference numerals

- 10: film camera
- 12: camera body
- 14: lens
- 16: lens group
- 18: lens barrel
- 20: shutter button
- 22: shutter speed dial
- 24: film advance crank lever
- 26: rewinding lever
- 28: rear lid
- 30: hinge
- 32: pressure plate
- 34: cartridge chamber
- 36: rewinding fork
- 38: spool
- 40: winding shaft
- 42: shutter curtain
- 44: shutter opening
- 48: viewfinder
- 50: film cartridge
- 52: cartridge
- 54: spool (shaft)
- 56: film
- 70: digital imaging system
- 72: cartridge module
- 74: image sensor module
- 76: USB port
- 78: SD card slot
- 80: control elements
- 82: display
- 84: contact pins of the image sensor module
- 86: strap
- 90: processing unit
- 92: first memory
- 94: sensor for detecting a film advance crank lever movement
- 96: thong
- 98: coil
- 100: take-up spool
- 102: magnetic element
- 104: image sensing array
- 106: on/off switch
- 108: contact pins of the cartridge module
- 110: kit
- 112: cartridge dock
- 114: cartridge chamber of the cartridge dock
- 116: pins of the cartridge dock
- 118: control elements of the cartridge dock
- 120: display of the cartridge dock

## Claims

1. A digital imaging system for converting a film camera into a digital camera, the digital imaging system comprising an image sensor module and a cartridge module, wherein the image sensor module and the cartridge module are detachable and connectable with each other by contact pins;
the image sensor module comprising an image sensing array, a processing unit coupled to the image sensing array for read-out an image from the image sensing array, a first memory coupled to the processing unit for storing a digital picture derived from an image read-out from the image sensing array and processed by the processing unit, and a sensor for detecting a film advance crank lever movement;
the cartridge module comprising a second memory coupled to the first memory via the contact pins for long time storing a digital picture derived from an image read-out from the image sensing array, an on/off switch being operable by a rewinding lever of a film camera, and a battery and an USB port for charging the battery;
the digital imaging system comprising a sound output unit.

2. The digital imaging system according to claim 1, wherein the image sensor module and a cartridge module are secured together by magnetic force.

3. The digital imaging system according to claim 1 or 2, wherein the sensor for detecting a film advance crank lever movement comprising a thong for measuring a rotating movement of an internal take-up spool of a film camera and the thong comprises a coil for measuring a change of a magnetic field and a take-up spool of a film camera comprises a magnetic element, preferably a magnetic stripe being secured by an adhesive to the take-up spool.

4. The digital imaging system according to any of the preceding claims, wherein the image sensor module comprises a holding magnet for fixing the sensor module to the body of a film camera, preferably to the back-side of the shutter.

5. The digital imaging system according to any of the preceding claims, wherein the contact pins of one of the image sensor module and the cartridge module are provided on a strap, preferably the contact pins of the image sensor module are provided on a strap.

6. The digital imaging system according to any of the preceding claims, wherein the cartridge module comprising data for adjusting the ISO value
and/or
the image sensor module comprising data for adjusting the ISO value.

7. The digital imaging system according to any of the preceding claims, wherein the cartridge module comprising data for activation time of the image sensing array of the image sensor module
and/or
the image sensor module comprising data for activation time of the image sensing array of the image sensor module.

8. The digital imaging system according to any of the preceding claims, wherein the on/off switch of the cartridge module comprises a neutral position into which the switch is returned after a rotational movement.

9. The digital imaging system according to any of the preceding claims, wherein the on/off switch of the cartridge module comprises at least two, preferably at least three rotational positions defining at least two, preferably at least three modes of operation.

10. The digital imaging system according to any of the preceding claims, wherein the on/off switch of the cartridge module comprises a sensor for determining an up/down movement.

11. A method for capturing a digital image with a film camera using a digital imaging system according to any of the preceding claims.

12. The method according to claim 11, wherein a rotational movement of a film advance crank lever activates the image sensing array of the image sensor module.

13. The method according to claim 11 or12, wherein operating a film advance crank lever of the film camera indicates the end of an image detection procedure, an image from the image sensing array is read-out and processed by the processing unit and a digital picture derived from the image read-out from the image sensing array and processed by the processing unit is stored in a first memory coupled to the processing unit for storing a digital picture, and the image sensing array of the image sensor module is reactivated for a further image and a sound indicating the readiness for an image detection procedure is restarted.

14. The method according to any of the preceding claims 11 to 13, wherein the image sensing array of the image sensor module is deactivated after a specified period of time.

15. A kit of parts comprising a digital imaging system for converting a film camera into a digital camera according to any one of the claims 1 to 14 and a cartridge dock.
